Europäisches Patentamt

European Patent Office

Office européen des brevets

(19)

(11) Veröffentlichungsnummer: **0 338 510**
**A2**

(12) **EUROPÄISCHE PATENTANMELDUNG**

(21) Anmeldenummer: 89106936.1

(22) Anmeldetag: 18.04.89

(51) Int. Cl.⁴: **B29C 59/02 , B29C 43/24 ,**
**B29C 55/06 , //B29K23:00,**
**B29L7:00**

(30) Priorität: 19.04.88 DE 3813061

(43) Veröffentlichungstag der Anmeldung:
**25.10.89 Patentblatt 89/43**

(84) Benannte Vertragsstaaten:
**AT BE CH DE ES FR GB GR IT LI NL SE**

(71) Anmelder: **ELASTONWERK BAYERN GMBH**
**Reichenbergerstrasse 6**
**D-8264 Waldkraiburg(DE)**

(72) Erfinder: **Hagn, Hermann, Dipl.Ing.(FH)**
**Kopernikusstrasse 20**
**D-8264 Waldkraiburg(DE)**
Erfinder: **Stautner, Hans, Dipl.-Ing. (FH)**
**Bahnhofstrasse 37**
**D-8090 Reitmehring(DE)**

(54) **Herstellung von zu dekorativen Zwecken geeigneten, strukturierten Folien.**

(57) Für dekorative Zwecke geeignete, geprägte Polyolefinfolien mit einem Griff, der demjenigen von
Weich-PVC entspricht, werden erhalten, wenn für
deren Herstellung lineares Polyethylen einer Dichte
von 0,880 - 0,915 g/cm³ (VLDPE),das kein Gleit-
und/oder Antiblockmittel enthält, verwendet wird.

EP 0 338 510 A2

## Herstellung von zu dekorativen Zwecken geeigneten, strukturierten Folien

Die vorliegende Erfindung betrifft die Herstellung von zu dekorativen Zwecken geeigneten, strukturierten Folien mit einem Griff, der etwa jenem von Folien aus Weich-PVC entspricht.

Für die Herstellung von meist gefärbten Gebrauchsartikeln mit ansprechendem Äußeren, wie beispielsweise Buchhüllen, Aktenordnern, Schnellheftern, Briefmappen und dergleichen werden praktisch ausschließlich Folien aus Weich-PVC eingesetzt, da diese durch ihre Eigenschaften wie beispielsweise einfache Herstellung und Verarbeitbarkeit, gute Prägbarkeit, Maßgenauigkeit, ansprechendes Äußeres und gute Verschweißbarkeit, um nur einige zu nennen, für diesen Verwendungszweck hervorragend geeignet sind. Obwohl man seit längerer Zeit aus Umweltgründen bestrebt ist die Verwendung von PVC möglichst einzuschränken, ist es bisher nicht gelungen ein anderes, umweltfreundliches Material zu finden, das Weich-PVC auf diesem speziellen Sektor ersetzen könnte.

Vor einiger Zeit wurde ein neues lineares Polyethylen bekannt, bei dem durch entsprechende Wahl und Menge an alpha-Olefincomonomeren eine Dichte unterhalb jener von LLDPE, nämlich von 0,900 bis 0,915 g/cm³, eingestellt ist (VLDPE, siehe z.B. "VLDPE, a new class of polyethylene, Plastics and Rubber International 1986, VOL 11, No 2). Später wurden ähnliche Polymere sogar herunter bis zu einer Dichte von 0,870 bekannt. Auf Grund des höheren Gehaltes an Comonomeren besitzt VLDPE einen geringeren kristallinen Charakter als LLDPE. Seine enge Molekularge wichtsverteilung, die verminderte Bildung kristalliner Regionen und die Unpolarität führen u.a. zu einem Schmelzpunkt von rund 115° C, einer hohen Zugfestigkeit, einer geringeren Sprödigkeit und einer höheren Flexibilität als bei LLDPE. Kennzeichnend für VLDPE ist auf der anderen Seite auch eine höhere Viskosität in geschmolzenem Zustand, eine erhöhte Haftfähigkeit, die bei Filmen zum Kleben bzw. "Blocken" führt, eine geringere Durchsichtklarheit von daraus hergestellten Folien sowie ein wachsartiger Griff.

VLDPE wird in erster Linie zur Verarbeitung ausgehend vom geschmolzenen Zustand wie Spritzguß und Extrusion, letztere auch zur Herstellung von Folien empfohlen, wobei die Verwendung von Gleit- oder Antiblockmitteln im Falle Folienherstellung als erforderlich bezeichnet wird, um eine Beschädigung der Folienoberfläche bei der Trennung zu vermeiden bzw. um überhaupt in der Lage zu sein, Folien von umfangreichen Folienwickeln, wie sie üblicherweise bei der Herstellung in größerem Maßstab erzeugt werden, wieder abwickeln zu können.

Für die Herstellung von insbesondere gefärbten Folien für dekorative Zwecke erwies sich der Gehalt an solchen Gleit- und/oder Antiblockmitteln jedoch als gravierender Nachteil, da diese bei der Herstellung und Weiterbehandlung der Folien an der Oberfläche austreten und zu einem unangenehmen Griff und optisch störenden Ablagerungen führen, die sich bei eingefärbten Folien besonders bemerkbar machen.

Überraschenderweise konnte nun gefunden werden, daß Folien aus VLDPE einer Dichte von 0,880 bis 0,915 g/cm³ ohne einen Gehalt an Gleit- und/oder Antiblockmitteln, die unmittelbar nach der Herstellung noch vor dem Aufwickeln durch einen Prägungsvorgang an der Oberfläche strukturiert worden sind, die unangenehmen Eigenschaften nicht mehr besitzen. Der Griff dieser strukturierten Folien ist vielmehr jenem der Folien aus Weich-PVC sehr ähnlich geworden. Trotzdem bleiben diese Folien aber gut verschweißbar.

Auf Grund dieser Eigenschaften der erfindungsgemäßen Folien sowie auf Grund ihrer guten Verarbeitbarkeit zu geformten Gegenständen, ihrer Färbbarkeit und Maßbeständigkeit erweisen sie sich überraschenderweise als idealer Ersatz für Weich-PVC auf dem Gebiet der strukturierten Folien für dekorative Zwecke, wobei hinsichtlich ihrer Überlegenheit bezüglich Umweltverträglichkeit kein Zweifel besteht, da sie aus einem Polyolefin sind.

Gegenstand der vorliegenden Erfindung ist demnach die Verwendung von linearem Polyethylen einer Dichte im Bereich von 0,880 - 0,915 g/cm³ (VLDPE), das keine Gleit- und/oder Antiblockmittel enthält, zur Herstellung von zu dekorativen Zwecken geeigneten strukturierten Folien mit Weich-PVC-artigem Griff. Besonders bevorzugt ist VLDPE einer Dichte von 0,900 - 0,915 g/cm³.

Die erfindungsgemäßen Folien können in allen für die genannten Verwendungszwecke üblichen Stärken wie beispielsweise in Stärken von 100 bis 500 µm, insbesondere von 100 bis 300 µm hergestellt werden. Sie sind vorzugsweise durch Zusatz der für die Polyolefinfärbung üblichen Pigmente gefärbt

Schließlich können sie, falls erwünscht, auch Füllstoffe, z.B. Talkum, Titandioxyd oder Kreide enthalten.

Zur Herstellung der erfindungsgemäßen Folien dienen die üblichen Verfahren, wie z.B. die verschiedenen Extrusionsverfahren mittels Breitschlitzdüse oder Blasfolienverfahren.

Ein besonderer Vorteil der erfindungsgemäßen Folie ist, daß sie auch über ein Kalandrierverfahren hergestellt werden kann, wobei die für die Verarbeitung von Weich-PVC üblichen Kalander ohne wesentliche Veränderungen benützt werden können. Dabei sollte darauf geachtet werden, daß während des Kalandrierens Temperaturbelastung und Spaltlast möglichst niedrig gehalten werden, da sonst störende Risse (Schmelzbruch) in der Oberfläche auftreten können.

Die Anwendbarkeit der üblichen PVC-Kalander bedeutet einen großen wirtschaftlichen Vorteil bei der Umstellung von strukturierten Weich-PVC-Folien auf die erfindungsgemäß hergestellten, strukturierten Folien, da dadurch keine teuren Investitionen erforderlich werden. Dies ist überraschend, da es bekannt ist, daß sich die Herstellung von Folien auf dem Kalander bei Polyolefinen schwierig gestaltet und sich daher das Herstellen von Polyolefinfolien unter Benützung eines Kalanders in der Praxis bisher kaum durchgesetzt hat.

Im Anschluß an die Folienherstellung erfolgt dann die Prägung in noch warmplastischem Zustand, die trotz der erhöhten Haftung von VLDPE problemlos verläuft. Dadurch wird die Folie beispielsweise mit einem Feinleinen-, Ledernarben- oder Matteffekt versehen.

Die erfindungsgemäße, strukturierte Folie kann für alle jene dekorativen Verwendungszwecke, wie beispielsweise für die Herstellung von Buchhüllen, Aktenordnern, Schnellheftern, Briefmappen, Angebotsmappen eingesetzt werden, für die zur Zeit Folien aus Weich-PVC Verwendung finden, ohne daß dadurch Nachteile sowohl in der Verarbeitbarkeit als auch im Aussehen der daraus hergestellten Artikel und im Griff derselben hingenommen werden müssen.

Sollten für verschiedene Anwendungszwecke Folien einer Shore-Härte benötigt werden, die jene der Folie aus VLDPE übersteigt, so ist es möglich, diese höheren Härtegrade durch Zumischung von Polypropylen zu erzielen, wobei mit steigender Menge Polypropylen die Shore-Härte ansteigt.

Beispiel:

VLDPE einer Dichte von 0,910 $g/cm^3$, einem Schmelzindex von 1g/10 min (190° C, s,16 kg Belastung) und eines Vicaterweichungspunktes von 87° C, das durch Zugabe eines üblichen blauen Pigments gefärbt ist, wird in diskontinuierlich oder kontinuierlich arbeitenden Knetern plastifiziert. Das Plastifikat wird dann direkt oder über ein beheiztes Walzenpaar in Streifen oder Strangform auf einen 4-Walzenkalander mit Walzenanordnung in L-Form aufgegeben. Die Walzentemperatur des Kalanders beträgt 175°, 175°, 182° und 175° C, die Walzengeschwindigkeiten der einzelnen Walzen betragen 12,5 m/min, 13,5 m/min, 16,5 m/min und 18,5 m/min. Die im letzten Walzenspalt austretende Folie einer Stärke von 410 μm wird durch ein Abzugsverhältnis zwischen letzter Kalanderwalze und den Abzugswalzen von 1 : 2 zu einer Folie von 200 μm Stärke verstreckt, dann durch eine Prägevorrichtung in der die Oberfläche der Prägewalze, z. B. mit einer Feinleinenoberflächengravur versehen ist, geführt, abgekühlt und schließlich aufgewickelt. Die so hergestellte Folie ist beispielsweise zur Herstellung von Buchhüllen und Überzügen von Aktenordnern geeignet. In gleicher Weise können aus einem VLDPE einer Dichte von 0,885 $g/cm^3$ und einem Schmelzindex von 1,7 g/10 min (190° C, 2,16 kg Belastung) strukturierte Folien hergestellt werden.

## Ansprüche

1. Verwendung von linearem Polyethylen einer Dichte im Bereich von 0,880 - 0,915 $g/cm^3$ (VLDPE), das keine Gleit- und/oder Antiblockmittel enthält, zur Herstellung von zu dekorativen Zwecken geeigneten, strukturierten Folien mit Weich-PVC-artigem Griff.

2. Verwendung nach Anspruch 1, dadurch gekennzeichnet, daß die Folien in einer Stärke von 0,1 - 0,5 mm hergestellt werden.

3. Verwendung nach den Ansprüchen 1 und 2, dadurch gekennzeichnet, daß zwecks Erzeugung von Folien einer höheren Shore-Härte als jene von reinem VLDPE, VLDPE mit einem Gehalt von Polypropylen eingesetzt wird.